# EUROPÄISCHE PATENTSCHRIFT

(11) **EP 0 786 280 B1**
(45) Veröffentlichungstag und Bekanntmachung des Hinweises auf die Patenterteilung: **23.01.2002**
(21) Anmeldenummer: 96115602.3
(22) Anmeldetag: 28.09.1996
(51) Int. Cl.: B01D 25/168

(54) **Filterpresse**
Filter press
Filtre-presse

(30) Priorität: 27.01.1996 DE 19602977
(43) Veröffentlichungstag der Anmeldung: 30.07.1997
(73) Patentinhaber: Lenser Kunststoff-Presswerk GmbH & Co. KG, D-89250 Senden (DE)
(72) Erfinder: Ruhland, Heinz, 73312 Geislingen (DE)
(74) Vertreter: Dziewior, Joachim, Dipl.-Phys. Dr.

(56) Entgegenhaltungen:
- EP-A- 0 674 929
- WO-A-95/33545
- DE-A- 4 419 865
- FR-A- 2 603 818
- US-A- 3 809 246

## Beschreibung

Die Erfindung betrifft eine Filterpresse, bei der mehrere randseitig wechselweise aneinandergesetzte Trägerplatten und Kammerplatten zwischen sich Filterkammern bilden, in die an einen Eckeinlauf anschließende Einlaufaussparungen für die zu filtrierende Suspension münden, wobei die Trägerplatte mit einem umlaufenden Plattenrahmen versehen ist und ein- oder beidseitig eine mit der Trägerplatte randseitig dicht verbundene, im übrigen durch ein Druckmittel in die Filterkammer vorbewegbare Membran tragen, die auf ihrer der jeweiligen Filterkammer zugekehrten Wandfläche mit einem Filtertuch belegte Profilvorsprünge aufweist, welche unter dem Filtertuch ein an einen Filtratauslauf angeschlossenes Rinnensystem für das Filtrat bilden, wobei die Membran zum lösbaren Anschluß an der Trägerplatte mit einer zu ihrer Ebene abgewinkelt vorstehenden Randleiste versehen ist, die in eine an der Trägerplatte am innenseitigen Rand des Plattenrahmens angeordnete Aufnahmenut greift und wobei die Einlaufaussparung in der Kammerplatte angeordnet ist.

Bei derartigen, etwa aus der DE 44 19 865 A bekannten Filterpressen liegt die Kammerplatte dem Rand der Membran im Bereich der Einlaufaussparung nicht an, so daß dort die Gefahr besteht, daß die Randleiste sich aus der Aufnahmenut löst. Dies hat zur Folge, daß die zu filtrierende Suspension in den mit dem Druckmittel zu beaufschlagenden Raum eintreten kann, wodurch der Filtrationsbetrieb gestört wird.

Der Erfindung liegt die Aufgabe zugrunde, eine Filterpresse der eingangs genannten Art so zu verbessern, daß ein Eindringen von Suspension in den Raum zwischen der Membran und der Trägerplatte sicher vermieden wird.

Diese Aufgabe wird nach der Erfindung dadurch gelöst, daß im Bereich der Einlaufaussparung eine die Randleiste der Membran übergreifende und in der Aufnahmenut fixierende Andruckleiste angeordnet ist, die parallel zum Rand der Membran verläuft und an der Trägerplatte angeschlossen ist.

Der durch die Erfindung erreichte Vorteil besteht im wesentlichen darin, daß die an der Trägerplatte angeschlossene Andruckleiste ein Lösen oder gar Austreten der Randleiste aus der Aufnahmenut selbst dann verhindert, wenn die Membran unter hohem Druck in die Filterkammer vorbewegt wird.

In bevorzugter Ausführungsform der Erfindung ist die Andruckleiste formschlüssig in eine Aussparungsnut eingesetzt und schließt bündig mit der Oberfläche des Plattenrahmens ab, wobei die Aussparungsnut gemeinsam von jeweils einer falzartigen Freischneidung in der Randleiste der Membran einerseits und in der Trägerplatte am Rand der Aufnahmenut andererseits gebildet ist. Dies hat den Vorteil, daß die Strömungsverhältnisse im Bereich der Einlaufaussparung durch die Andruckleiste weitgehend unbeeinflußt bleiben.

Weiterhin hat es sich als vorteilhaft herausgestellt, daß die Andruckleiste länger als die Breite der Einlaufaussparung ist und jeweils endseitig von der Kammerplatte abgedeckt ist.

In besonders einfacher und daher vorteilhafter Ausgestaltung ist die Andruckleiste von einem im Querschnitt rechteckigen Profil gebildet.

Die Andruckleiste ist zweckmäßigerweise über eine Schraubverbindung mit der Trägerplatte verbunden, wobei jeweils zwei beidseits der Trägerplatte angeordnete Andruckleisten paarweise miteinander verschraubt sind. Die Zahl der Verschraubungen hängt dabei von der Länge der Andruckleiste einerseits und dem maximal auftretenden Druck andererseits ab. Zur paarweisen Verschraubung ist vorteilhafterweise die eine der beiden Andruckleisten mit einem Schraubengewinde und die andere mit einer eine Absenkung für den Schraubkopf aufweisenden Durchgangsbohrung versehen.

Schließlich ist im Rahmen der Erfindung vorgesehen, daß die Andruckleiste aus Edelstahl, aus einem kunststoff- oder gummibeschichteten Metall oder einem glas- oder karbonfaserverstärkten Kunststoff besteht.

Im folgenden wird die Erfindung an einem in der Zeichnung dargestellten Ausführungsbeispiel näher erläutert; es zeigen:
- Fig. 1: den Eckbereich der Trägerplatte einer Filterpresse,
- Fig. 2: einen Schnitt durch den Gegenstand nach Fig. 1 längs der Linie II - II,
- Fig. 3: eine Detaildarstellung des Gegenstands nach Fig. 2, jedoch mit anders ausgeführter Membran,
- Fig. 4: einen Schnitt durch den Gegenstand nach Fig. 1 längs der Linie IV - IV.

Die in der Zeichnung nur teilweise dargestellte Trägerplatte 1 bzw. Kammerplatte 2 ist vorgesehen für eine Filterpresse, bei der mehrere solcher, randseitig wechselweise aneinander gesetzte Trägerplatten 1 und Kammerplatten 2 zwischen sich Filterkammern 3 bilden. In diese Filterkammern 3 münden Einlaufaussparungen 4 für die zu filtrierende Suspension, die an einen Eckeinlauf 5 anschließen.

Die Trägerplatte 1 ist mit einem umlaufenden Plattenrahmen 6 versehen und trägt beidseitig eine mit der Trägerplatte 1 randseitig dicht verbundene, im übrigen durch ein Druckmittel in die Filterkammer 3 vorbewegbare Membran 7. Auf ihrer der jeweiligen Filterkammer 3 zugekehrten Wandfläche weist die Membran 7 Profilvorsprünge 8 auf, die mit einem in der Zeichnung nicht dargestellten Filtertuch belegt sind. Diese Profilvorsprünge 8 bilden unter dem Filtertuch ein Rinnensystem für das Filtrat, das an einen in der Zeichnung ebenfalls nicht dargestellten, in der Regel im unteren Plattenbereich angeordneten Filtratauslauf angeschlossen ist.

Die Membran 7 ist zum lösbaren Anschluß an der Trägerplatte 1 mit einer zu ihrer Ebene abgewinkelt vorstehenden Randleiste 9 versehen, die in eine an der Trägerplatte 1 am innenseitigen Rand des Plattenrahmens 6 angeordnete Aufnahmenut 10 greift.

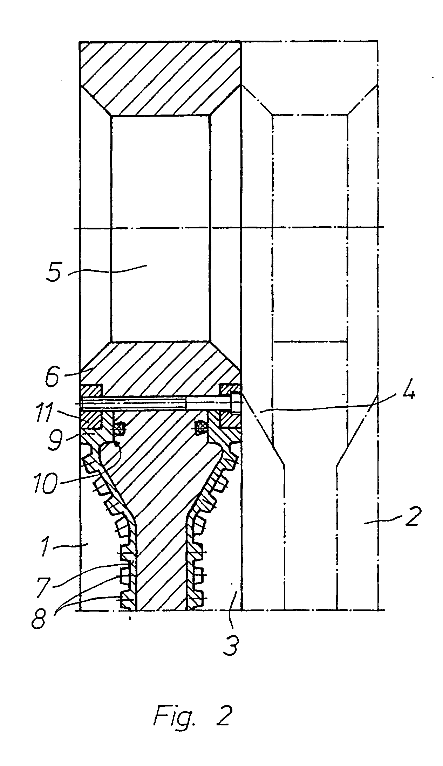

Die Einlaufaussparung 4 ist, wie sich aus der Fig. 2 ergibt, in der Kammerplatte 2 angeordnet.

Um ein Lösen der Randleiste 1 aus der Aufnahmenut 10 zu verhindern, insbesondere dann, wenn die Membran 7 unter der Wirkung des Druckmittels in die Filterkammer 3 hin vorbewegt wird, ist im Bereich der Einlaufaussparung 4 eine die Randleiste 9 der Membran 7 übergreifende Andruckleiste 11 vorgesehen, durch die die Randleiste 9 in der Aufnahmenut 10 fixiert wird. Diese Andruckleiste 11 verläuft parallel zum Rand der Membran 7 und ist an der Trägerplatte 1 angeschlossen.

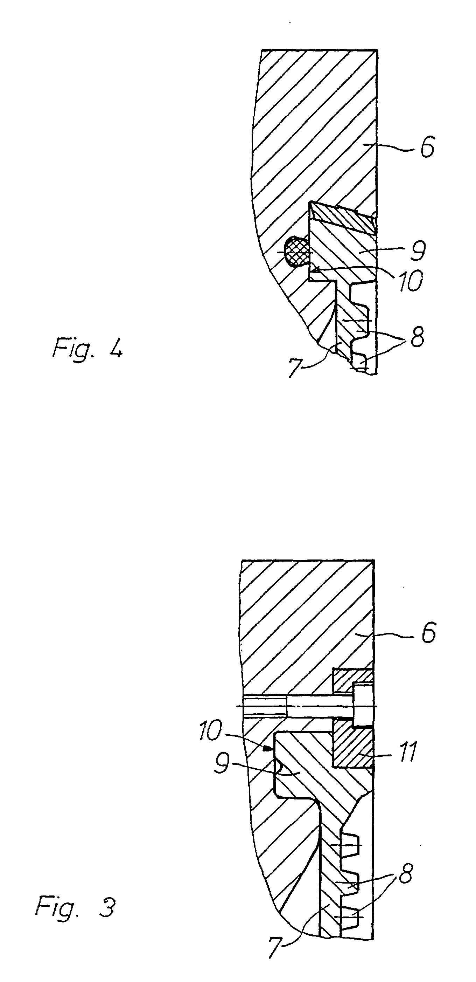

Wie sich aus den Fig. 2 und 3 ergibt, ist die Andruckleiste 11 formschlüssig in eine Aussparungsnut eingesetzt und schließt bündig mit der Oberfläche des Plattenrahmens 6 ab. Hierdurch ist sicher gestellt, daß die Störmungsverhältnisse im Bereich der Einlaufaussparung 4 durch die Andruckleiste 11 nicht beeinflußt werden. Die Aussparung selbst wird einerseits von einer falzartigen Freischneidung in der Randleiste 9 der Membran 7 und andererseits in der Trägerplatte 1 am Rand der Aufnahmenut 10 gebildet.

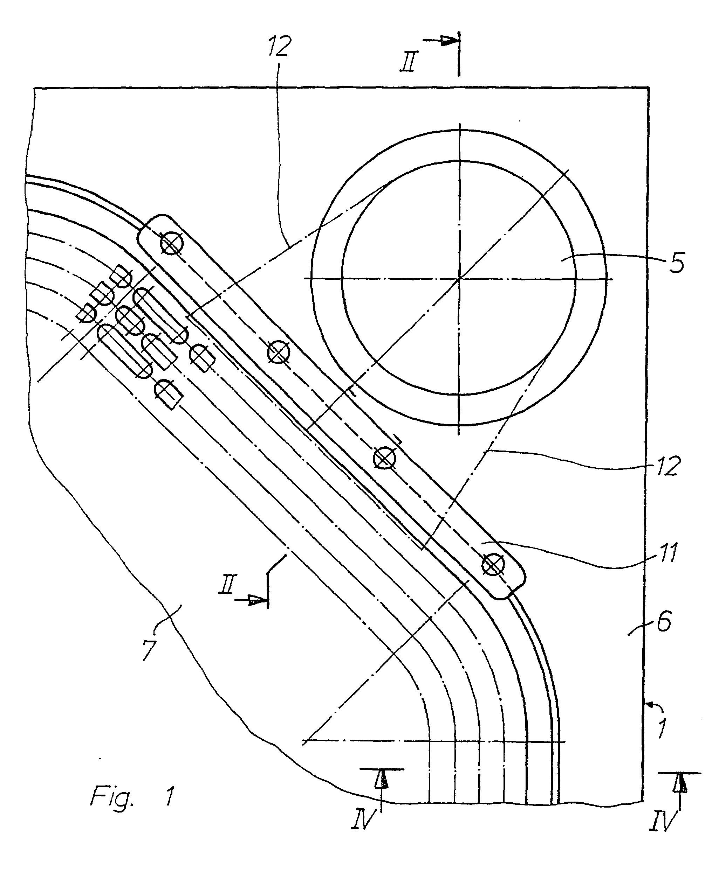

Die Andruckleiste 11 ist, wie sich dies aus Fig. 1 ergibt, länger als die Breite der in Fig. 1 durch die strichpunktierte Linie 12 angedeuteten Einlaufaussparung 4. Sie wird dadurch endseitig jeweils durch die aufliegende Kammerplatte 2 abgedeckt und erhält somit zusätzlichen Halt. Im übrigen ist die Andruckleiste 11 von einem im Querschnitt rechteckigen Profil gebildet.

Wie sich aus Fig. 2 ergibt, sind jeweils zwei beidseits der Trägerplatte 1 angeordnete Andruckleisten 11 paarweise miteinander verschraubt. Dazu ist die eine der beiden Andruckleisten 11 mit einem Schraubengewinde und die andere mit einer eine Absenkung für den Schraubenkopf aufweisenden Druchgangsbohrung versehen.

Die Andruckleiste selbst besteht zweckmäßigerweise aus Edelstahl, aus einem kunststoff- oder gummibeschichteten Metall oder einem glas- oder karbonfaserverstärkten Kunststoff.

## Patentansprüche

1. Filterpresse, bei der mehrere randseitig wechselweise aneinandergesetzte Trägerplatten (1) und Kammerplatten (2) zwischen sich Filterkammern (3) bilden, in die an einen Eckeinlauf (5) anschließende Einlaufaussparungen (4) für die zu filtrierende Suspension münden, wobei die Trägerplatte (1) mit einem umlaufenden Plattenrahmen (6) versehen ist und ein- oder beidseitig eine mit der Trägerplatte (1) randseitig dicht verbundene, im übrigen durch ein Druckmittel in die Filterkammer (3) vorbewegbare Membran (7) tragen, die auf ihrer der jeweiligen Filterkammer (3) zugekehrten Wandfläche mit einem Filtertuch belegte Profilvorsprünge (8) aufweist, welche unter dem Filtertuch ein an einen Filtratauslauf angeschlossenes Rinnensystem für das Filtrat bilden, wobei die Membran (7) zum lösbaren Anschluß an der Trägerplatte (1) mit einer zu ihrer Ebene abgewinkelt vorstehenden Randleiste (9) versehen ist, die in eine an der Trägerplatte (1) am innenseitigen Rand des Plattenrahmens angeordnete Aufnahmenut (10) greift und wobei die Einlaufaussparung (4) in der Kammerplatte (2) angeordnet ist, **dadurch gekennzeichnet, daß** im Bereich der Einlaufaussparung (4) eine die Randleiste (9) der Membran (7) übergreifende und in der Aufnahmenut (10) fixierende Andruckleiste (11) angeordnet ist, die parallel zum Rand der Membran (7) verläuft und an der Trägerplatte (1) angeschlossen ist.

2. Filterpresse nach Anspruch 1, **dadurch gekennzeichnet, daß** die Andruckleiste (11) formschlüssig in eine Aussparungsnut eingesetzt ist und bündig mit der Oberfläche des Plattenrahmens (6) abschließt, wobei die Aussparungsnut gemeinsam von jeweils einer falzartigen Freischneidung in der Randleiste (9) der Membran (7) einerseits und in der Trägerplatte (1) am Rand der Aufnahmenut (10) andererseits gebildet ist.

3. Filterpresse nach Anspruch 1 oder 2, **dadurch gekennzeichnet, daß** die Andruckleiste (11) länger als die Breite der Einlaufaussparung (4) ist und jeweils endseitig von der Kammerplatte (2) abgedeckt ist.

4. Filterpresse nach einem der Ansprüche 1 bis 3, **dadurch gekennzeichnet, daß** die Andruckleiste (11) von einem im Querschnitt rechteckigen Profil gebildet ist.

5. Filterpresse nach einem der Ansprüche 1 bis 4, **dadurch gekennzeichnet, daß** jeweils zwei beidseits der Trägerplatte (1) angeordnete Andruckleisten (11) paarweise miteinander verschraubt sind.

6. Filterpresse nach Anspruch 5, **dadurch gekennzeichnet, daß** die eine der beiden Andruckleisten (11) mit einem Schraubengewinde und die andere mit einer eine Absenkung für den Schraubenkopf aufweisenden Durchgangsbohrung versehen ist.

7. Filterpresse nach einem der Ansprüche 1 bis 6, **dadurch gekennzeichnet, daß** die Andruckleiste (11) aus Edelstahl, aus einem kunststoff- oder gummibeschichteten Metall oder einem glas- oder karbonfaserverstärkten Kunststoff besteht.

## Claims

1. Filter press in which a plurality of support plates (1) and chamber plates (2) placed edgewise alternately against one another between them form filter chambers (3), opening out into which are recessed inlets (4) for the suspension that is to be filtered, which inlets (4) connect up to a corner inlet (5), the support plate (1) being provided with an all-round plate frame (6) and on one or both sides supporting a membrane (7) which is tightly joined to the support plate (1) at the edges but otherwise adapted to be moved forward into the filter chamber (3) by a pressure medium, said membrane (7) incorporating profiled projections (8) covered by a filter cloth on its wall surface nearest the respective filter chamber (3), said profiled projections (8) forming beneath the filter cloth a system of channels for the filtrate which is connected to a filtrate outlet, the membrane (7) being provided with an edging strip (9) which juts out at an angle to its plane, for joining the membrane (7) in a removable manner at the support plate (1), said edging strip (9) extending into a locating slot (10) disposed on the support plate (1) on the inner rim of the plate's frame and the recessed inlet (4) being disposed in the chamber plate (2),
**characterised in that** in the region of the recessed inlet (4) there is disposed a pressure strip (11) which overlaps the edging strip (9) of the membrane (7) and fixes it in the locating slot (10), said pressure strip (11) running parallel to the edge of the membrane (7) and being joined at the support plate (1).

2. Filter press according to claim 1, **characterised in that** the pressure strip (11) is inserted in a positive fit into a recessed slot and terminates flush with the surface of the plate frame (6), the recessed slot being formed jointly by a respective rebate in the edging strip (9) of the membrane (7), on the one hand, and in the support plate (1) at the edge of the locating slot (10), on the other hand.

3. Filter press according to claim 1 or 2, **characterised in that** the pressure strip (11) is longer than the width of the recessed inlet (4) and is covered by the chamber plate (2) at each end.

4. Filter press according to any of claims 1 to 3, **characterised in that** the pressure strip (11) is formed by a profile of rectangular cross-section.

5. Filter press according to any of claims 1 to 4, **characterised in that** a respective two pressure strips (11) arranged on either side of the support plate (1) are bolted together in pairs.

6. Filter press according to claim 5, **characterised in that** one of the two pressure strips (11) is provided with a screw thread and the other with a through-hole incorporating a depression for the screw head.

7. Filter press according to any of claims 1 to 6, **characterised in that** the pressure strip (11) is made of stainless steel, a plastics-coated or rubber-coated metal, or a plastic reinforced with glass fibres or carbon fibres.

## Revendications

1. Filtre-presse dans lequel plusieurs plateaux-supports (1) et plateaux-chambres (2) appliqués en alternance les uns contre les autres au niveau du bord, définissent entre eux des chambres de filtre (3) dans lesquelles débouchent des canaux d'entrée (4) disposés en angle pour la suspension à filtrer, le plateau-support (1) étant pourvu d'un cadre de plateau (6) continu et portant sur une face ou sur les deux faces une membrane (7) qui est liée de manière étanche audit plateau-support (1) au niveau du bord et peut être déplacée dans la chambre de filtre (3) à l'aide d'un fluide de pression, laquelle membrane, sur sa surface de paroi tournée vers la chambre de filtre (3) concernée, présente des saillies profilées (8) recouvertes d'une toile filtrante, qui forment, sous la toile filtrante, un système de canaux connecté à une sortie de filtrat pour le filtrat, la membrane (7), pour sa fixation démontable au plateau-support (1), étant pourvue d'un rebord (9) en saillie qui forme un angle avec le plan de la membrane et pénètre dans une rainure de montage (10) aménagée sur le plateau-support, dans le bord intérieur du cadre de plateau (1), le canal d'entrée (4) étant disposé dans le plateau-chambre (2), **caractérisé en ce que** dans la région du canal d'entrée (4) est disposée une barrette de pression (11) qui chevauche le rebord (9) de la membrane (7), le bloque dans la rainure de montage (10), s'étend parallèlement au bord de la membrane (7) et est reliée au plateau support (1).

2. Filtre-presse selon la revendication 1, **caractérisé en ce que** la barrette de pression (11) est montée par complémentarité de formes dans une rainure et est affleurante avec la surface du cadre de plateau (6), la rainure étant formée conjointement par une découpe en forme de feuillure dans le rebord (9) de la membrane d'une part et une découpe en forme de feuillure dans le plateau-support (1), dans le bord de la rainure de montage (10) d'autre part.

3. Filtre-presse selon la revendication 1 ou 2, **caractérisé en ce que** la barrette de pression (11) a une longueur supérieure à la largeur du canal d'entrée (4) et est masquée par le plateau-chambre à ses extrémités.

4. Filtre-presse selon une des revendications 1 à 3, **caractérisé en ce que** la barrette de pression (11) est formée d'un profilé à section rectangulaire.

5. Filtre-presse selon une des revendications 1 à 4, **caractérisé en ce que** deux barrettes de pression (11) disposées de part et d'autre du plateau-support (1) sont liées entre elles par paire.

6. Filtre-presse selon la revendication 5, **caractérisé en ce que** l'une des deux barrettes de pression (11) est pourvue d'un filetage et l'autre barrette de pression est pourvue d'un trou débouchant avec un lamage pour la tête de vis.

7. Filtre-presse selon une des revendications 1 à 6, **caractérisé en ce que** la barrette de pression (11) est en acier spécial, en un métal recouvert de matière plastique ou de caoutchouc ou matière plastique renforcée par des fibres de verre ou des fibres de carbone.
